# EUROPEAN PATENT SPECIFICATION

(11) **EP 3 767 355 B1**
(45) Date of publication and mention of the grant of the patent: **08.11.2023**
(21) Application number: 19187355.3
(22) Date of filing: 19.07.2019
(51) Int. Cl.: G02B 6/44, H02G 3/32, F16L 3/223

(54) **CABLE HOLDER**
KABELHALTER
SUPPORT DE CÂBLE

(43) Date of publication of application: 20.01.2021
(73) Proprietor: Raycap IP Development Ltd., Nicosia (CY)
(72) Inventor: DIONISIADIS, George, 2012 Strovolos, Nicosia (CY); BABAGEORGAKAS, Christos, 2012 Strovolos, Nicosia (CY)
(74) Representative: Wilson Gunn

(56) References cited:
- DE-A1-102011 111 399
- US-A- 2 899 160
- US-A- 3 066 181
- US-A- 3 876 076

## Description

### TECHNICAL FIELD

One or more implementations relate generally to a fiber-optic cable holder.

### BACKGROUND

Fiber-optic distribution cabinets are basic elements of telecommunication networks and are used to manage and protect fiber-optic cables from outdoor environmental conditions. With modern network densification, a large number of cables and micro-ducts need to be managed within the distribution cabinets. In order to reduce the cost and complexity of deployment, apparatus is needed within the cabinets that can be quickly operated with minimal effort and minimum tools for fast and simple installation. Cables within the cabinets also should be easily accessed and removed.

Cable holders are used in fiber-optic distribution cabinets to fix fiber-optic cables in a secure manner and to organize the cables and avoid pulling the cables.

For example, US 2 899 160 A shows a cable holder having a first clamping element and a second clamping element, the first and second clamping element being movable relative to each other. In a first position, a cable can be inserted through an opening into slots formed in the first and the second clamping element. The opening is closed through the relative movement of the clamping elements in a second position.

In US 3 066 181 A, the clamping elements are impinged into the closed position by means of a spring ring.

Further, US 3 876 076 A shows a holder for fishing rods, the rods being secured at the holder in slots by means of a clip-in connection. Additionally, the holder provides lock bolts, the lock bolts closing the slots.

From DE 10 2011 111 399 A1 a cable holder is known. The cable holder comprises an elongated frame and two pivotable flaps mounted at the frame. At opposite side of the elongated frames, slots are formed in the frame. The slots provide a clip-in connection for cables and the cables are additionally secured at the cable holder by means of the flaps.

For example, the cable holders may secure the fiber-optic cables before they are lead into a splicing tray. Some cable holders fix together groups of cables making it difficult to access single specific cables and increasing the likelihood of tangling all of the cables together. Other cable holders allow cables to be sorted by fixing the cable in separate positions. However, these cable holders demand considerable installation time since the entire cable needs to be passed through cable holder bores. To this end, there is a need for an improved cable holder that allows cable fixation and cable sorting in a simple and easy-to-use way.

### SUMMARY

This object is solved by a cable holder according to claim 1.

### BRIEF DESCRIPTION OF THE DRAWINGS

The included drawings are for illustrative purposes and serve to provide examples of possible structures and operations for the disclosed inventive systems, apparatus, methods and computer-readable storage media. These drawings in no way limit any changes in form and detail that may be made by one skilled in the art without departing from the spirit and scope of the disclosed implementations.
FIG. 1 shows perspective view of cable holders.
FIG. 2 shows an exploded perspective view for one of the cable holders shown in FIG. 1.
FIG. 3A shows a side view of the cable holder.
FIG. 3B shows an upper section view of the cable holder.
FIG. 4A shows a top view of the cable holder.
FIG. 4B shows a side section view of the cable holder.
FIGS. 5A and 5B show the cable holder in an open position.
FIGS. 6A and 6B show the cable holder in an closed position.

### DETAILED DESCRIPTION

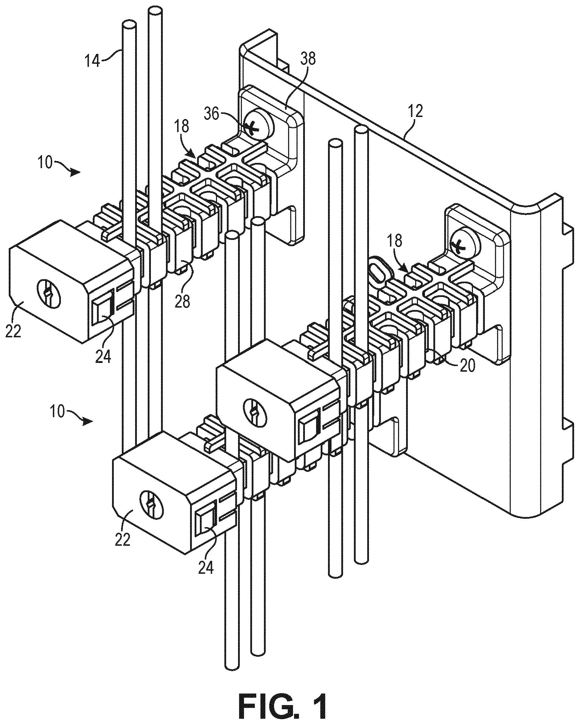

FIG. 1 is a perspective view of fiber-optic cable holders 10 mounted on a base 12 attached inside a cabinet. Fiber-optic cable holder 10 is mounted on base 12 with screws 36 that insert through round holes formed on back mounting platform 38. Fiber-optic cables 14 are inserted and clipped into keyhole-shaped slots 18. Fiber-optic cables 14 are locked into slots 18 with snap-fit joints 20.

By releasing and locking a front cap 22 to main body 28, fiber-optic cables 14 can be separately attached or removed from cable holder 10. Even when fully loaded, any individual cable 14 can be accessed or removed without having to remove other cables 14. Instead of hinges, cable holder 10 uses in-line locking member 20 to hold fiber-optic cables 14 in slots 18. Additional space is not needed between adjacent cable holders 10 to allow for hinges to open up. Thus, cable holder 10 provides quicker, more secure, more accessible, and more compact cable installation.

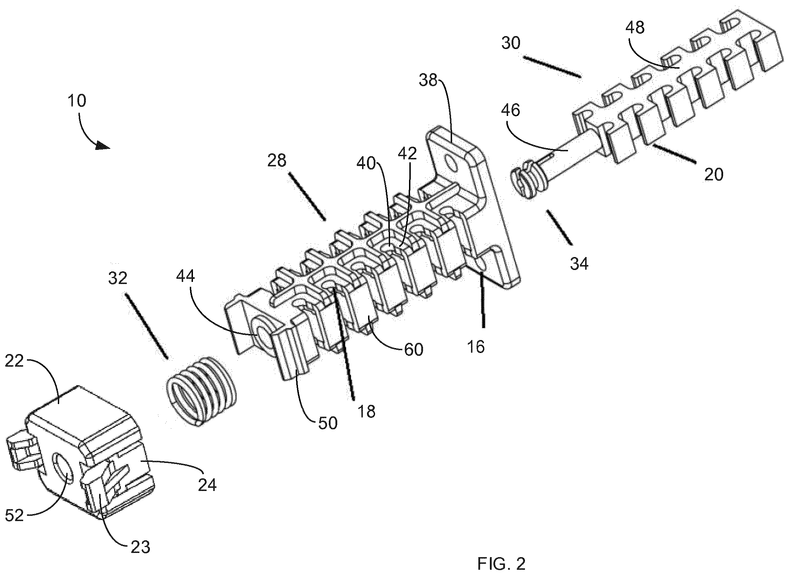

FIG. 2 shows an exploded perspective view of fiber-optic cable holder 10. Cable holder 10 includes a main body 28, a locking member 30, spring 32, and cap 22. Locking member 30 includes u-shaped joints 20 alternatively referred to as arms, that extend out from opposite sides of a center spine 48. A rod 46 extends out from a top longitudinal end of spine 48. A coupler 34 is formed on the top end of rod 46 and attached to cap 22.

Main body member 28 has a fishbone-shaped design that forms twelve keyhole-shaped slots 18 that retain cables 14. Each slot 18 includes a circular shaped attachment section 40 increasingly widening receiving section 42 that extends out to side walls 60. Circular shaped attachment section 40 may have a diameter slightly smaller than a diameter of cables 14. Inserting cable 14 through receiving section 42 into attachment section 40 snaps cable 14 inside slot 18.

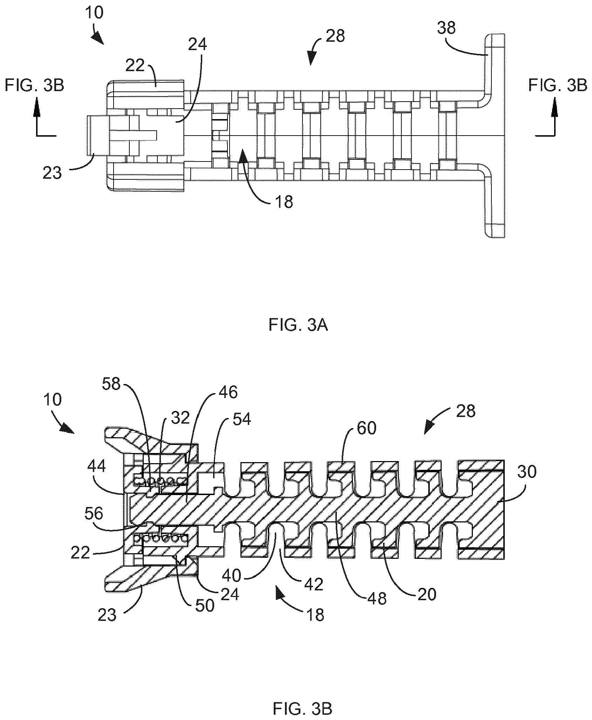

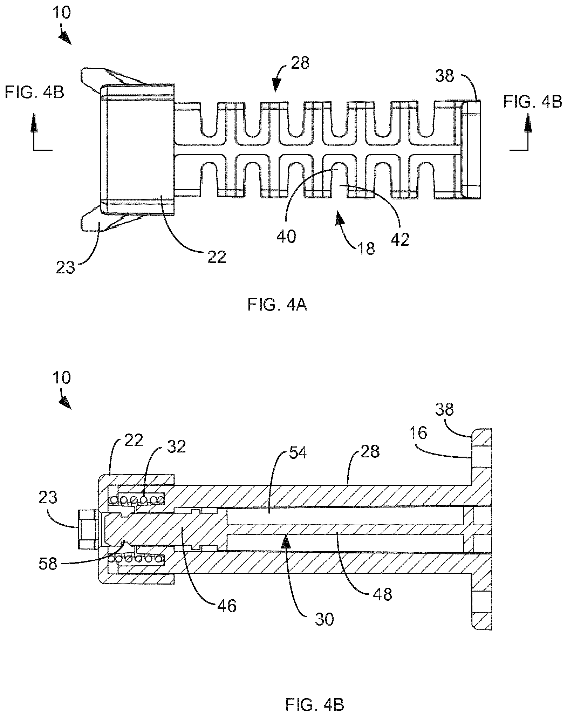

Ledges 50 extend outwardly from opposite sides of the front longitudinal end of main body 28. A hollow core and a hole 44 extend through the center axis of main body 28 (see FIGS. 3B and 4B). Spring 32 seats down onto the front longitudinal end of body member 28 in between ledges 50. Two arms 23, alternatively referred to as actuators, are located on opposite sides of cap 22 that when pressed inward pull clips 24 outward away from each other and detach from ledges 50.

Locking member 30 inserts into the hollow channel formed in main body 28. Rod 46 extends up through the hollow channel and hole 44 formed in main body 28, and extends further up through spring 32. Coupler 34 attaches into a hole 52 that extends through cap 22.

To move cable holder 10 into the open position, cap 22 is pushed downward toward the front longitudinal end of body member 28. Spring 32 compresses and clips 24 spread outwardly and over shelves 50. Locking member 30 moves downward in the center channel of body member 28 moving arms 20 down and behind side walls 60 and out of slots 18. Fiber-optic cables can then be inserted or removed from slots 18.

To move cable holder 10 into a closed position, arms 23 are pressed inward spreading apart clips 24 and out from underneath shelves 50. Spring 32 pushes cap 22 and attached locking member 30 upwards moving arms 20 over slots 18. Arms 20 may press against the lateral sides of inserted fiber-optic cables locking the cables into slots 18.

FIG. 3A is a side view of cable holder 10 and FIG. 3B is an upper section view of cable holder 10. The open position of cable holder 10 is shown in FIGS 3A and 3B. Locking member 30 inserts into hollow channel 54 formed along the longitudinal axis of body member 28. Rod 46 inserts up through hole 44. A seam 56 formed on the front end of rod 46 seats over a rim 58 formed around the inside wall of hole 44 holding locking member 30 to cap 22.

As explained above, slots 18 have keyhole shapes with a circular attachment section 40 and outwardly opening receiving section 42. The external end of receiving section 42 at side walls 60 may be larger than the outside diameter of fiber-optic cable 14. The diameter of circular attachment section 40 may be equal to or slightly smaller than the diameter of fiber-optic cable 14. Fiber-optic cable 14 is easily inserted laterally through receiving section 42 and snapped and held in attachment section 40.

In the open position, L-shaped arms 20 are located behind sidewalls 50. When actuators 23 are pressed inwardly, clips 24 spread apart. Spring 32 then decompresses moving cap 22 slightly away from the front longitudinal end of body member 28 and moving attached locking member 30 forward in channel 54. Arms 20 move over slots 18 holding any inserted fiber-optic cables into slots 18. Arms 20 may press against the lateral sides of fiber-optic cables 14 further securing the fiber-optic cables into slots 18.

FIG. 4A is a top view of cable holder 10 and FIG. 4B is a side section view of cable holder 10. Cable holder 10 is again shown in the open position. Screw receiving holes 16 are shown extending through platform 38. Spine 48 of locking member 30 is shown extending along the longitudinal axis of channel 54 formed in main body 28. In the open position, cap 22 is pushed down over the front longitudinal end of body member 28 compressing spring 32 and moving locking member 30 into a lowered open position.

Also notice again the keyhole shape of slots 18 that include circular attachment section 40 and receiving section 42. Fiber-optic cables 14 to be inserted laterally into slots 18 simplifying installation compared cable retaining systems where the entire cable is inserted lengthwise into a hole.

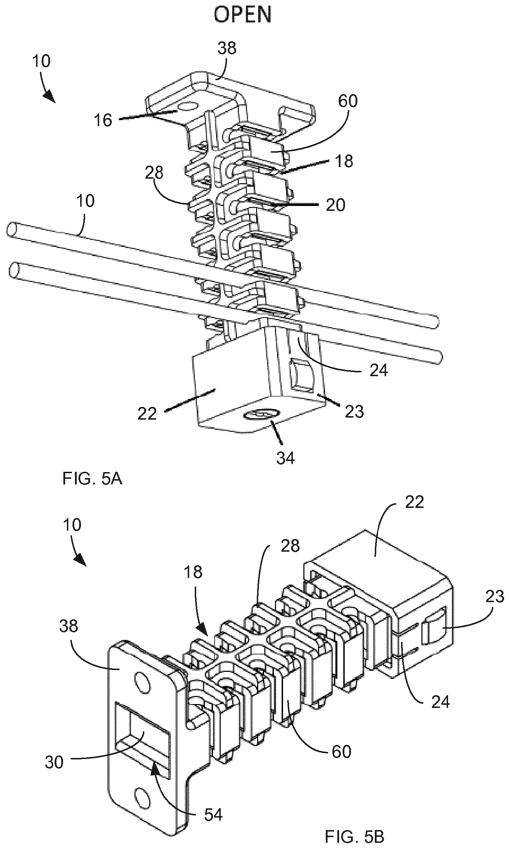

FIGS 5A and 5B are perspective views of cable holder 10 shown in the open position. As mentioned above, in the open position, cap 22 is moved downward until clips 24 attach over the front end of body member 28. Pushing cap 22 downward compresses spring 32 and moves locking member 30 downward into channel 54. When cap 22 is pushed, it remains at this position (by the clips) despite the spring forces, so the holder remains in the open state without the need to keep pushing the cap. Arms 20 of locking member 30 move behind side walls 60 of body member 28 opening slots 18. In the open position, fiber-optic cables 14 can either be slid in and out of slots 18.

Fiber-optic cables 14 may be compress fit into slots 18. Therefore, fiber-optic cables 14 will not freely fall out of slots 18 when cable holder 100 is in the open position. A technician can then remove or insert a new fiber-optic cable into a slot 18 while other fiber-optic cables 18 remain secured in their associated slots 18.

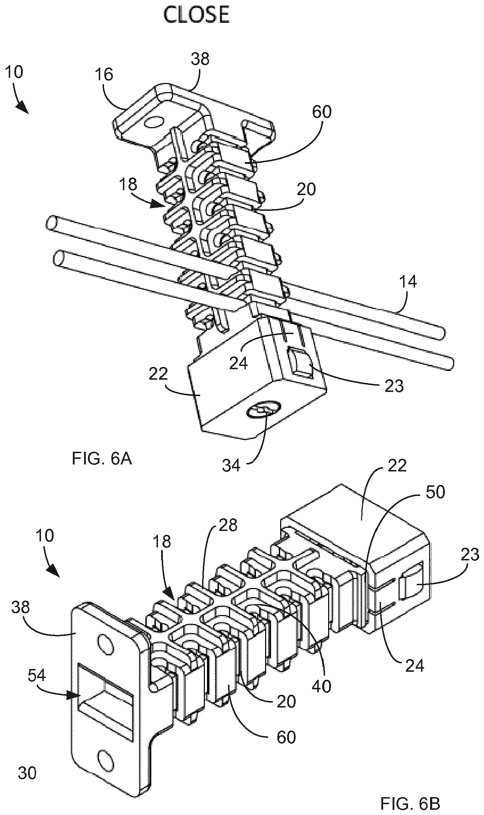

FIGS 6A and 6B are perspective views of cable holder 10 shown in the closed position. As mentioned above, in the closed position, actuators 23 are pressed inward spreading clips 24 further apart and releasing cap 22 from ledge 50. Compressed spring 32 moves cap 22 forward pulling locking member 30 upward in channel 54 and moving arms 20 from behind body member sidewalls 60 and into slots 18. Arms 20 may snap over fiber-optic cables 14 located in circular sections 40 of slots 18. Thus, releasing cap 22 from the end of body member 28 locks multiple fiber-optic cables 14 into multiple slots 18 at the same time, further reducing installation time.

In one example, spring 32 is made from metal and all other parts of cable holder 10 are made from plastic. Of course, other materials can also be used. The holder is quite compact and the plastic material is less expensive and weighs less than metallic holders.

Other advantages over existing cable retaining devices include simplicity and quick attachment and detachment of fiber-optic cables. Each fiber-optic cable 14 is held in a fixed position in a separate slot 18. This avoids the confusion of sorting fiber-optic cables 14 that are all held together in a bundle. Fiber-optic cables 14 can also be separately inserted into cable holder 10 and separately removed from cable holder 10 without having to insert or remove any other cables. Fiber-optic cables 14 can be laterally inserted and locked into cable holder 10 without using tools and without having to pass the entire length of cable 14 through a hole. Even without locking member 30, cables 14 are still securely snapped into slots 18.

No hinges are used in cable holder 10. The length, width, and shape of cable holder 10 stays substantially the same when transitioning between the open and close positions. Thus, no additional space is needed to open and close cable holder 10. This in-line design allows multiple cable holders 10 to be installed closely next to each other increasing cable holder density in a cabinet.

It should also be understood that while fiber-optic cables 14 are described in the examples above, cable holder 10 can be used for holding any type of cable, conduit, or pipe, including power cables, Ethernet cable, and any other electrical, voice, or data cable.

References above have been made in detail to preferred embodiment. Examples of the preferred embodiments were illustrated in the referenced drawings. While preferred embodiments where described, it should be understood that this is not intended to limit the invention to one preferred embodiment.

## Claims

1. A cable holder comprising:
a body member (28) including slots (18) formed on side walls (60) for holding cables (14); and
a locking member (30) located inside the body member (28) and having joints (20), wherein the joints (20) are snap-fit joints that are configured to lock the cables (14) into the slots (18);
wherein a cap (22) is attached to the locking member (30) and configured to move the locking member (30) into an open position where the slots (18) are opened to receive the cables (14) and a closed position where the slots (18) are at least partially closed to hold the cables (14) in the slots (18), and
wherein the slots (18) are configured so that the cables (14) can be inserted and clipped into the slots (18).

## Patentansprüche

1. Kabelhalter, umfassend:
ein Körperbauteil (28), das Schlitze (18) enthält, die an Seitenwänden (60) gebildet sind, um Kabel (14) zu halten; und
ein Verriegelungsbauteil (30), das innerhalb des Körperbauteils (28) lokalisiert ist und Verbinder (20) hat, wobei die Verbinder (20) Schnappverbinder sind, die dazu konfiguriert sind, die Kabel (14) in den Schlitzen (18) zu verriegeln;
wobei eine Kappe (22) an dem Verriegelungsbauteil (30) angebracht und dazu konfiguriert ist, das Verriegelungsbauteil (30) in eine offene Position zu bewegen, wo die Schlitze (18) geöffnet sind, um die Kabel (14) aufzunehmen, und eine geschlossene Position, wo die schlitze (18) wenigstens teilweise geschlossen sind, um die Kabel (14) in den Schlitzen (18) zu halten, und
wobei die Schlitze (18) derart konfiguriert sind, dass die Kabel (14) in die Schlitze (18) eingesetzt und eingeklemmt werden können.

## Revendications

1. Support de câble, comprenant :
un élément de corps (28) comportant des fentes (18) qui sont pratiquées sur des parois latérales (60) dans le but de maintenir des câbles (14) ; et
un élément de verrouillage (30) qui est agencé à l'intérieur du corps (28) et qui est pourvu d'articulations (20), dans lequel les articulations (20) sont des articulations à encliquetage qui sont configurées de manière à verrouiller les câbles (14) à l'intérieur des fentes (18) ;
dans lequel une coiffe (22) est fixée à l'élément de verrouillage (30) et est configurée de manière à déplacer l'élément de verrouillage (30) dans une position ouverte, dans laquelle les fentes (18) sont ouvertes dans le but de recevoir les câbles (14), et une position fermée, dans laquelle les fentes (18) sont au moins partiellement fermées dans le but de maintenir les câbles (14) à l'intérieur des fentes (18), et
dans laquelle les fentes (18) sont configurées de telle sorte que les câbles (14) puissent être insérés et clipsés à l'intérieur des fentes (18).
